# EUROPEAN PATENT APPLICATION

(11) **EP 3 698 647 A1**
(43) Date of publication of application: **26.08.2020**
(21) Application number: 19382128.7
(22) Date of filing: 21.02.2019
(51) Int. Cl.: A23L 29/00, A23L 29/20, A23L 29/269

(54) **FOOD COMPOSITION FOR 3D PRINTING, PROCESS FOR PRODUCING A FOOD PRODUCT BY 3D PRINTING AND FOOD PRODUCT OBTAINED THEREBY**

(71) Applicant: BSH Hausgeräte GmbH, 81739 München (DE); BSH Electrodomésticos España, S.A., 50016 Zaragoza (ES)
(72) Inventor: Alaman Aguilar, Jorge, 50012 Zaragoza (ES); Gimeno Asin, Manuel, 50015 Zaragoza (ES); Mateo Anson, Nuria, 50007 Zaragoza (ES); Mir Bel, Jorge, 50019 Zaragoza (ES); Schröter, Alexandra, 67117 Limburgerhof (DE)

(57) **Abstract**

The invention relates to a food composition for 3D printing, comprising a first component 1 which can be printed with a 3D printer 2 into a self-supporting food body 3 that is self-supporting up to a temperature of 50 °C, and a second component 4,5 that is a viscoelastic fluid in the temperature range of from 4 °C to 40 °C, wherein the self-supporting food body 3 is a dough that can be hardened by baking at a temperature ≥ 60°C to provide a solid food body 6. The invention relates moreover to a process for producing a food product 7 and a food product 7.

## Description

The present invention relates to a food composition for 3D printing, a process for producing a food product by 3D printing and a food product obtained thereby.

3-Dimensional (3D) printing, also known as additive manufacturing, is becoming increasingly important. It has already been applied to a great variety of materials. Accordingly, numerous 3D printing methods have so far been developed. Meanwhile it has also become popular in the food sector. The use of 3D printing technology has a great potential to fabricate 3D food constructs with complex geometries, elaborated textures and tailored nutritional systems. The current status is described for example in the paper "3D Printing Technologies Applied for Food Design: Status and Prospects", by Fernanda C. Godoi, Sangeeta Prakash and Bhesh R. Bhandari in the Journal of Food Engineering 179 (2016) 44-54.

Additive manufacturing technology such as 3D printing systems can be used to rapidly prepare meals on demand with the advantage of customization in shape, size, design and nutritional composition. 3D food printing through extrusion processes requires food behaviour with certain properties of flowability, starting and stopping on demand, and holding its structure after deposition. Thus, the 3D printing process requires food behaviour properties in between a solid and a fluid. Although most food is mainly composed of water, food rarely behaves as a Newtonian fluid. Food response to a superimposed stress, such as extrusion, is typically shear-thinning, meaning that the viscosity drops over the time of shear stress, and it is very much influenced by temperature. This makes 3D printing technology complex to be applied to a wide range of food preparations.

In the field of food, 3D printing technology has been applied mainly to chocolate, sugar or confectionary products, rather than whole meal or meal substitutes. Main food constituents (carbohydrates, fat, proteins), bearing in mind their intrinsic properties and binding mechanisms, make a food structure with certain properties that determine whether it is printable and holds the 3D structure. Dough, cheese, meat paste, and cooked rice have been extruded and deposited in layers forming 3D shaped structures. Other techniques such as bioprinting by drop-on-demand deposition has been used for cell cultured meat, and powder binding technology has been applied to sugars to build 3D structures.

However, no predictive models for printability have been reported based on their rheology and macronutrient composition.

Specific apparatuses for the 3D printing of food bodies have also been developed.

The publication US 2016/0106142 A relates to the additive manufacturing for producing edible compositions. Disclosed is an apparatus for producing a three-dimensional edible composition, said apparatus comprising: a plurality of storage containers for holding food components in powder or liquid form; a print head for depositing a fluid food component mixture onto a substrate in successive layers; a mixing chamber for blending food components until a desired composition and viscosity is reached; a feeder for delivering a metered amount of a food component from a storage container to the mixing chamber; a mixture delivery system for delivering blended food components to the print head; a controller adapted for receiving a set of instructions specifying compositions to be added to a food mixture and issuing movement commands in response thereto; a print head positioning system in communication with said controller; wherein the blended food component is deposited onto a substrate by the print head at desired locations in successive layers to create a desired three-dimensional structure formed from the blended food components. The printed composition is made of macronutrients in powder form.

Specific food compositions for 3D printing have also been proposed.

The publication CN 105475829 A discloses a 3D printed-food composition comprising 40 to 60 parts by weight of flour, 10 to 20 parts by weight of rice powder, 3 to 5 parts by weight of salt, 3 to 5 parts by weight of maltose, 10 to 20 parts by weight of water and fresh milk, 10 to 20 parts by weight of gelatine, 5 to 10 parts by weight of condensed milk and 1 to 5 parts by weight of pigment.

The publication CN 106071742 A relates to a corn and rice flour 3D printing food material and processing method thereof. It discloses in this regard a material prepared from, by weight, 60 to 70 parts of rice flour, 10 to 15 parts of corn flour, 10 to 15 parts of water, 8 to 10 parts of fresh milk, 3 to 5 parts of buckwheat flour, 3 to 5 parts of plant oil, 2 to 3 parts of honey, 2 to 3 parts of xylitol, 2 to 3 parts of salt, 2 to 3 parts of maltodextrin, 2 to 3 parts of dietary fiber, 1 to 2 parts of emulsifying agent and 0.1 to 0.2 parts of essence.

The publication CN 106071740 A relates to a tomato rice flour 3D printing food material and a processing method therefor. Described is in particular the prepartion of a tomato rice flour 3D printing food material wherein the following raw materials are used (in parts by weight): 50 to 60 parts of rice flour, 15 to 20 parts of water, 8 to 10 parts of glutinous rice powder, 8 to 10 parts of tomato juice, 8 to 10 parts of skimmed milk powder, 3 to 5 parts of table salt, 3 to 5 parts of vegetable oil, 2 to 3 parts of maltose, 2 to 3 parts of xylitol, 1 to 3 parts of edible pigments, 1 to 3 parts of dietary fibers, 1 to 2 parts of an emulsifier and 0.5 to 0.8 parts of essence.

Against this background it was an object of the present invention to provide improved 3D printable food compositions. Preferably, the food compositions should allow the preparation of food products that contain at least a solid component and a liquid component, whereby the use of sub-components, for example a liquid component that contains actually two liquid sub-components, should preferably be also possible. The food composition should preferably be easily printable by a variety of 3D printing methods including extrusion and inkjet technology.

This object is achieved according to the invention with a food composition for 3D printing, a process for producing a food product by 3D printing and a food product obtained thereby, having the features of the corresponding independent claims. Preferred embodiments of the food composition according to the invention are disclosed in the corresponding dependent claims. Preferred embodiments of the food composition according to the invention correspond to preferred embodiments of the process for producing a food product and the food product obtained thereby and vice versa, even if not explicitly stated herein.

The invention is thus directed to a food composition for 3D printing, comprising a first component which can be printed with a 3D printer into a self-supporting food body that is self-supporting up to a temperature of 50 °C, and a second component that is a viscoelastic fluid in the temperature range of from 4 °C to 40 °C, wherein the self-supporting food body is a dough that can be hardened by baking at a temperature ≥ 60°C to provide a solid food body. A viscoelastic fluid shows non-Newtonian flow behavior.

In a preferred embodiment of the food composition, the first component has a complex viscosity (η*) of 0.6 x 10⁶ to 6 x10⁶ mPa.s at 50 °C and contains
(a) 40 to 50 wt% carbohydrates;
(b) 6 to 9 wt% proteins; and
(c) 20 to 30 wt% fat, in particular shortening fat;
based on the total weight of the first component.

It was found that the width of the layers assembling the 3D structure walls maintains the specific original dimension with less than 5% of deformation from the original width after baking when this first component is being used. This means essentially that the outer dimensions of the solid food body deviate less than 5 % from the corresponding dimensions of the self-supporting food body.

It was moreover found that 50 °C is the optimal printing temperature.

The complex viscosity (η*) is measured herein by using a rheometer. However, other methods and devices can also be used.

The complex viscosity (η*) is calculated with the formula η*= G* / ω, where G* is the complex modulus, calculated as G* = √(G'^2 + G"^2), and ω is the deformation frequency.
G' is the storage modulus and G" is the loss modulus.

The dynamic mechanical characteristics of the food material were measured herein during a temperature sweep using a TA-Instrument AR 2000 type stress controlled rheometer. A cross-hatched ETC parallel plate geometry was used with a plate diameter of 2.5 cm at a gap setting of 3 mm. The elastic or storage modulus (G') and loss modulus (G"), and loss factor (tan (G"/G") were determined at a linear temperature increment of 5 °C/min up to 120 °C. The measurements were performed at a constant strain amplitude of 10⁻³ and an oscillation frequency of 1Hz. The stress and phase shift between stress and deformation were determined. From these data, the G' and G", and the loss factor, were calculated.

Non-limiting examples for doughs used as a first component in the food composition of the present invention are the following three doughs, namely a sweet dough (Table 1), a healthy dough (Table 2) and a savoury dough (Table 3). The sweet dough had a complex viscosity of 1180, the healthy dough a complex viscosity of 709 and the savoury dough a complex viscosity of 1091.

**Table 1**

| **SWEET DOUGH** | **in wt%** |
|---|---|
| All purpose flour | 31.44% |
| Extra fine sugar | 11.8% |
| Shortening fat | 25.16% |
| Water | 11.3% |
| Salt | 0.38% |
| Pregellatinised starch | 9.03% |
| Egg white powder | 1.84% |
| Cocoa powder | 9.05% |
| TOTAL | 100% |

**Table 2**

| **HEALTHY DOUGH** | **in wt%** |
|---|---|
| Oats flour | 27.3% |
| Buckwheat flour | 18.6% |
| Margarine | 29.2% |
| Extra fine sugar | 7.6% |
| Salt | 0.3% |
| Egg white powder | 1.7% |
| Lemon zest fine | 1% |
| Maltodextrin | 3% |
| Vanilla | 1% |
| water | 10.3% |
| TOTAL | 100% |

**Table 3**

| **SAVOURY DOUGH** | **in wt%** |
|---|---|
| Corn flour | 21.4% |
| Precooked corn flour | 16.1% |
| All-purpose flour | 11.2% |
| Margarine | 21.9% |
| extra fine sugar | 0.9% |
| salt | 0.4% |
| vegan egg replacer | 1.7% |
| maltodextrin | 3.9% |
| water | 14.5% |
| parmesan cheese | 8% |
| TOTAL | 100 |

The first component of the present invention, in particular the doughs described in Tables 1 to 3 did not show a deformation after baking. Accordingly, the first component allows for example the manufacture of snack wherein t affect the dimensions of the printed snack.

In the present invention, a food composition is preferred, wherein the second component contains 10 to 30 wt% total solids, based on the total weight of the second component, and has an apparent viscosity in the range of from 5 x 10³ to 1 x 10⁵ mPa.s at a shear rate of 1 s⁻¹ in a temperature range of from 4 to 20 °C.

The apparent viscosity can be measured for example with a rotatory viscosimeter, as was done herein at a temperature of 20 °C.

In the present invention, a food composition is moreover preferred, wherein the second component contains 0.01 to 1 wt% of hydrocolloid polymers, based on the total weight of the second component.

At a content of total solids of 10 to 30 wt% of total solids, based on the total weight of the second component, and such a low concentration of gelling and thickening hydrocolloids, the shear-thinning behavior of the second component is minimal, with good flow-ability and starting/stopping flow behaviour on demand.

Hydrocolloids are hydrophilic polymers from vegetable, animal, microbial or synthetic sources with the ability to form colloidal dispersions in water. This combined with food ingredients can modify the rheological behaviour of the food material through the mechanism of gellation. The hydrocolloids comprise preferably a water-soluble anionic polysaccharide. A frequently used hydrocolloid is gellan whose gellation properties are influenced by concentration and temperature. Aqueous solutions of gellan at high concentrations and low temperatures form aggregates of double helices, and double-helical strands act as cross-links, while at high temperatures molecules are in random coil conformation.

In a preferred food composition of the present invention, the second component thus contains a water-soluble anionic polysaccharide in the amount of 0.01 to 0.1 wt%, based on the total amount of the second component. Preferably, the water-soluble anionic polysaccharide is gellan. Concentrations of gellan in the range of 0.01-0.1% have been determined as optimal to formulate food preparations to be printed in the temperature range of 4-60°C.

At these low concentrations, gellan cannot form a gel even at low temperature, but its conformation is a sol where cross-linking exists. Although the sol is not homogeneous, the system is still a liquid with relatively stable viscosity values that are less dependent on temperature or shear rate, and thus closer to a Newtonian plateau. This can be explained by the random coil conformation of the sol, in contrast to the double helix conformation of the gel that shows more shear-thining behaviour, because double helix may be more easily oriented along the shear flow than the coil.

In a preferred embodiment of the food composition of the present invention, the second component contains
(i) 4 to 30 wt% carbohydrates;
(ii) 0.1 to 16 wt% fat; and
(iii) 0.4 to 4 wt% proteins;
based on the total weight of the second component.

In a particularly preferred embodiment of the food composition of the present invention, the textural characteristics of the second component at a temperature in the range of from 4 to 20 °C are such that the firmness is from 0.2 to 1.1 N, the consistency is from 6 to 30 N.s, the cohesiveness is from 0.2 to 1.2 N, and the viscosity index is from 0.4 to 3 N.s.

These textural characteristics were evaluated by using a Texture Analyser equipped with a 5 kgf load cell. A Texturometer TA.XTPlus was used that measures different probes for the different properties. Back extrusion tests were performed in order to evaluate the viscoelastic properties of the second component. Tests were carried out in a purpose-built back extrusion measuring system made up with an extrusion disc (33 mm diameter) that was positioned centrally over the sample container (37 mm diameter). During the test, the disc proceeds into the sample (100 ml) to penetrate to a depth of 40% at 1 mm/s test speed. At this point, which corresponds most likely to the maximum force, the probe returns to its original position. The 'peak' or maximum force is taken as a measurement of firmness (N). The area under the curve up to this point is taken as an indication of consistency (Ns). The negative region of the graph, drawn on probe return, is the result of the weight of sample which is lifted primarily on the upper surface of the disc on return, i.e. due to back extrusion, and hence gives an indication of the viscosity (Ns), i.e. the resistance to flow off the disc. The maximum negative force is taken as an indication of the cohesiveness (N) of the sample. The measurements were carried out at room temperature.

Table 4 shows the values for textural characteristics for exemplary second components.

**Table 4**

| | **Firmness (N)** | **Consistency (Ns)** | **Cohesiveness (N)** | **Viscosity Index (Ns)** |
|---|---|---|---|---|
| Coco Cream | 1.06 | 28.15 | 1.16 | 2.72 |
| Mango Passion Fruit | 0.27 | 6.97 | 0.21 | 0.48 |
| Aubergine | 0.65 | 17.61 | 0.80 | 1.99 |
| Pepper | 0.77 | 20.37 | 0.75 | 1.92 |
| Blueberry | 1.03 | 28.15 | 1.18 | 2.95 |
| Tofu | 0.41 | 10.95 | 0.31 | 0.85 |

Further examples for second components that may be used especially as fillings or toppings in snacks are described in Tables 5 to 10.

**Table 5**

| **Banana Filling** | |
|---|---|
| Banana | 37% |
| Citric acid | 0.20% |
| Fructose | 8.26% |
| Gellan gum | 0.10% |
| Water | 54% |
| TOTAL | 100% |
| Total solids | 18% |
| | |

| **Peanut chocolate Topping** | |
|---|---|
| Cocoa | 6.25% |
| Peanut butter | 8.33% |
| Sugar | 11.67% |
| Gellan gum | 0.10% |
| Soy lecithin | 0.52% |
| Water | 73.12% |
| TOTAL | 100% |
| Total solids | 26% |

**Table 7**

| **Coconut Filling** | |
|---|---|
| Coconut water | 35.36% |
| Coconut cream | 50.52% |
| Sugar | 13.64% |
| Xanthan gum | 0.10% |
| Gellan gum | 0.20% |
| TOTAL | 100% |
| I Total solids | 30% |

**Table 8**

| **Mango and Passion Fruit Topping** | |
|---|---|
| Mango puree | 60 52% |
| Passion fruit puree | 25.22% |
| Sugar | 13.62% |
| Xanthan gum | 0.05% |
| Gellan gum | 0.35% |
| Vanilla paste | 0.25% |
| TOTAL | 100% |
| Total solids | 29% |

**Table 9**

| **Cheese Cake Filling** | |
|---|---|
| Cheese cream | 44.81% |
| Mascarpone cheese | 4.72% |
| Fructose | 2.36% |
| Gellan gum | 0.10% |
| Vanilla paste | 0.94% |
| Yoghourt | 47.17% |
| TOTAL | 100% |
| Total solids | 27% |

**Table 10**

| **Strawberry Topping** | |
|---|---|
| Fresh strawberry | 82.27% |
| Fructose | 17.63% |
| Gellan gum | 0.10% |
| TOTAL | 100% |
| Total solids | 25% |

The second component can thus comprise one or more sub-components. For example, in case the food product is a snack comprising a baked dough and in addition a filling and a topping, a first sub-component might be a filling and the second sub-component might be a topping.

The invention relates moreover to a process for producing a food product by 3D printing, comprising the following steps
(A) providing a first component which can be printed into a self-supporting food body that is self-supporting up to a temperature of 60°C, wherein the self-supporting food body is a dough;
(B) printing the first component at a temperature in the range of from 4 to 60 °C, preferably in the range of from 45 to 55 °C, using a 3D printer;
(C) hardening the dough printed in step (B) by baking it at a temperature ≥ 60 °C to provide a solid food body; and
(D) printing a second component containing at least one liquid sub-component that is a viscoelastic fluid in the temperature range of from 4 °C to 40 °C at a temperature in the range of from 4 to 60 °C, preferably in the range of from 45 to 55 °C, to obtain the food product.

The printing in step (B) is carried out preferably at a temperature in the range of from 45 to 55 °C. The optimal printing temperature can be obtained from the data in a rheogram.

The self-supporting food body can be for example built by overlaying layers of the first component extruded through a nozzle with a diameter of from 2 to 4 mm.

The baking of the printed dough in step (C) can be carried out in a way known to a person skilled in the art. The optimum baking temperature and time will depend on the composition of the dough. In general, the width of the layers assembling the 3D structure walls maintains the specific original dimension with less than 5% of deformation from the original width after baking. The present invention thus provides food compositions for 3D printable food that are resilient to heat induced structure deformation in the process of the invention.

The 3D printer used herein is not limited insofar as it can print the food composition of the present invention into a three-dimensional object. I.e., the 3D printer is adapted to perform additive deposition.

In the process of the present invention, the printing in step (B) is preferably effected by extrusion or inkjet printing in a manner known to the person skilled in the art. To this end, a commercial 3D food printer can be used. Even more preferably, the printing in step (B) of the first component is effected by extrusion. It is noted however that for the printing of the first component essentially the same printing method can be used as is used for a conventional 3DP print for filament polymers.

The present invention allows to advantageously use a second component that comprises several sub-components. Preferably, a first liquid sub-component and a second liquid sub-component are being used.

The process of the invention preferably involves that the printing in step (B) is carried out in a manner such that cavities are being formed in the self-supporting food body. It is then preferred that in step (D), the printing of the second component containing at least one liquid sub-component is carried out by filling the second component into the formed cavities in the formed solid food body.

For example, in the case of a printed snack the cavities in the solid food body can be filled with the fillings and topics described above. Accordingly, the first and second sub-components can have for example different flavors and textures. In general, such fillings can be jetted into the cavities. To this end, a suitable nozzle expels a controlled amount of the sub-component into the cavities.

In any way, the final dimensions of the food product can in general be controlled perfectly.

The invention finally relates to a food product obtained by 3D printing of a food composition for 3D printing, comprising a first component which can be printed into a self-supporting food body that is self-supporting up to a temperature of 50 °C, and a second component that is a viscoelastic fluid in the temperature range of from 4 °C to 40 °C, wherein the self-supporting food body is a dough that can be hardened by baking at a temperature ≥ 60°C to provide a solid food body.

The present invention has several advantages. It allows the production of food products in a simple and precise manner. In embodiments of the present invention, the main advantage is that the given parameters can predict food printability, thus enhancing the potential of application of the technology to a broad range of food compositions. The food compositions allow to arrive at solid food bodies that resist deformation while baking or heat processing is performed.

The disclosure will become more fully understood from the detailed description of preferred embodiments given herein below for illustration only and with reference to the following six figures.
Fig. 1 is a photograph made in the initial stages of 3D printing of the first component wherein several layers of deposited dough can be seen;
Fig. 2 is a photograph made during the filling of a cavity of a baked solid food body with a filling;
Fig. 3 is a photograph made during the filling of a cavity of a baked solid food body with a topping;
Fig. 4 is a photograph of a 3D printed snack consisting of of a first component (sweet dough) and second component (coconut filling and mango topping);
Fig. 5 is a photograph of a 3D printed snack consisting of of a first component (healthy dough) and a second component (blueberry filling and tofu topping); and
Fig. 6 is a photograph of a 3D printed snack consisting of a first component (savoury dough) and a second component (pepper filling and aubergine topping).

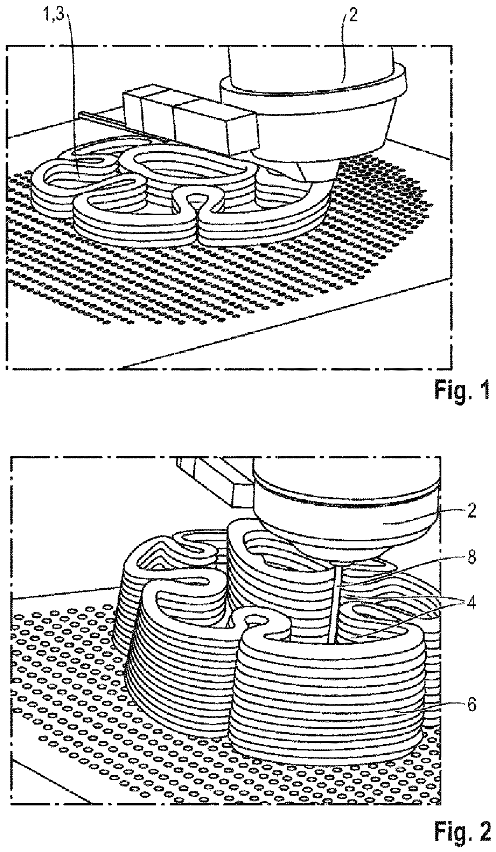

Fig. 1 is a photograph made in the initial stages of 3D printing of a first component 1 into a self-supporting food body 3. Several layers of deposited dough 1 can be seen. The deposition has been effected such that several cavities are formed in the dough 1. 2 refers to a 3D printer.

Fig. 2 is a photograph made during the filling of a cavity of a baked solid food body 6 with a filling 4 that is provided as a jet 8 of a first sub-component. 2 refers to a 3D printer. The individual layers deriving from the first component can be clearly recognized.

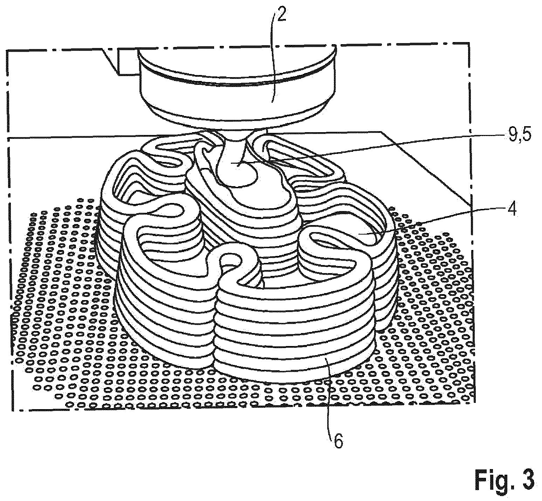

Fig. 3 is a photograph made during the filling of a cavity of a baked solid food body 6 with a topping. The topping is provided as a jet 9 of a second sub-component 5 into an upper cavity of the baked solid food body 6 shown already in Fig. 2. The presence of the first sub-component 4 in other cavities of the baked solid food body 6 can be seen. 2 refers to a 3D printer.

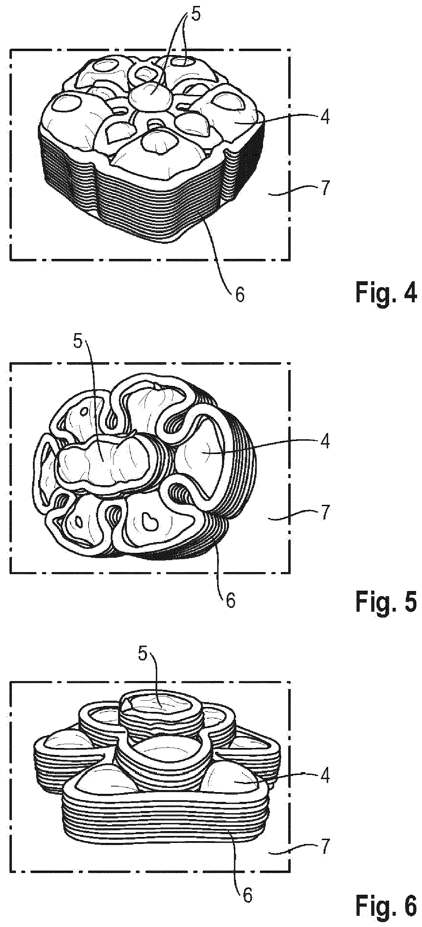

Fig. 4 is a photograph of a 3D printed snack as an example of a food product 7 of the present invention consisting of of a first component (sweet dough) and a second component (coconut filling and mango topping). 6 refers to the solid food body while 4 is a first sub-component consisting of a filling and 5 a second sub-component consisting of a topping.

Fig. 5 is a photograph of a 3D printed snack as a further example of a food product 7 of the present invention consisting of of a first component (healthy dough) and a second component (blueberry filling and tofu topping). 6 refers to the solid food body while 4 is a first sub-component consisting of a filling and 5 a second sub-component consisting of a topping.

Fig. 6 is a photograph of a 3D printed snack as a still further example of a food product 7 of the present invention consisting of a first component (savoury dough) and a second component (pepper filling and aubergine topping). 6 refers to the solid food body while 4 is a first sub-component consisting of a filling and 5 a second sub-component consisting of a topping.

### REFERENCE NUMERALS

- 1: First component (of the food composition)
- 2: 3D printer
- 3: Self-supporting food body
- 4: Second component (of the food composition), first sub-component
- 5: Second component (of the food composition), second sub-component
- 6: Solid food body
- 7: Food product
- 8: Jet of first sub-component
- 9: Jet of second sub-component

## Claims

1. Food composition for 3D printing, comprising a first component (1) which can be printed with a 3D printer (2) into a self-supporting food body (3) that is self-supporting up to a temperature of 50 °C, and a second component (4,5) that is a viscoelastic fluid in the temperature range of from 4 °C to 40 °C, wherein the self-supporting food body (3) is a dough that can be hardened by baking at a temperature ≥ 60°C to provide a solid food body (6).

2. Food composition according to claim 1, wherein the first component (1) has a complex viscosity of 0.6 x 10⁶ to 6 x10⁶ mPa.s at 50 °C and contains
(a) 40 to 50 wt% carbohydrates;
(b) 6 to 9 wt% proteins; and
(c) 20 to 30 wt% fat;
based on the total weight of the first component (1).

3. Food composition according to claim 1 or 2, wherein the second component (4,5) contains 10 to 30 wt% of total solids, based on the total weight of the second component (4,5), and has an apparent viscosity in the range of from 5 x 10³ to 1 x 10⁵ mPa.s at a shear rate of 1 s⁻¹ in a temperature range of from 4 to 20 °C.

4. Food composition according to claim 3, wherein the second component (4,5) contains 0.01 to 1 wt% of hydrocolloid polymers, based on the total weight of the second component (4,5).

5. Food composition according to any of claims 1 to 4, wherein the second component (4,5) contains
(i) 4 to 30 wt% carbohydrates;
(ii) 0.1 to 16 wt% fat; and
(iii) 0.4 to 4 wt% proteins;
based on the total weight of the second component (4,5).

6. Food composition according to any of claims 1 to 5, wherein the textural characteristics of the second component at a temperature in the range of from 4 to 20 °C are such that the firmness is from 0.2 to 1.1 N, the consistency is from 6 to 30 N.s, the cohesiveness is from 0.2 to 1.2 N, and the viscosity index is from 0.4 to 3 N.s.

7. Food composition according to any of claims 1 to 6, wherein the second component (4,5) contains a water-soluble anionic polysaccharide in the amount of 0.01 to 0.1 wt%, based on the total amount of the second component (4,5).

8. Food composition according to claim 7, wherein the water-soluble anionic polysaccharide is gellan.

9. Process for producing a food product by 3D printing, comprising the following steps
(A) providing a first component which can be printed into a self-supporting food body that is self-supporting up to a temperature of 60°C, wherein the self-supporting food body is a dough;
(B) printing the first component at a temperature in the range of from 4 to 60 °C using a 3D printer;
(C) hardening the dough printed in step (B) by baking it at a temperature ≥ 60 °C to provide a solid food body; and
(D) printing a second component containing at least one liquid sub-component that is a viscoelastic fluid in the temperature range of from 4 °C to 40 °C at a temperature in the range of from 4 to 60 °C to obtain the food product.

10. Process according to claim 9, wherein the printing in step (B) of the first component (1) is effected by extrusion or inkjet printing.

11. Process according to claim 10, wherein the printing in step (B) of the first component (1) is effected by extrusion.

12. Process according to any of claims 9 to 11, wherein a first liquid sub-component and a second liquid sub-component are being used.

13. Process according to any of claims 9 to 12, wherein the printing of the first component (1) in step (B) is carried out in a manner such that cavities are being formed in the self-supporting food body (3).

14. Process according to claim 13, wherein in step (D) the printing of the second component (4,5) containing at least one liquid sub-component (4,5) is carried out by filling it into the formed cavities in the self-supporting food body (3).

15. Food product (7) obtained by 3D printing of a food composition for 3D printing, comprising a first component (1) which can be printed into a self-supporting food body that is self-supporting up to a temperature of 50 °C, and a second component that is a viscoelastic fluid in the temperature range of from 4 °C to 40 °C, wherein the self-supporting food body is a dough that can be hardened by baking at a temperature ≥ 60°C to provide a solid food body.
